Europäisches Patentamt

European Patent Office

Office européen des brevets

(11) Veröffentlichungsnummer: **0 002 660**
**B1**

(12) **EUROPÄISCHE PATENTSCHRIFT**

(21) Anmeldenummer: **78101203.4**

(22) Anmeldetag: **24.10.78**

(51) Int. Cl.³: **H 05 B 3/00, H 02 B 1/18, F 24 H 3/00**

(54) Schaltschrank-Heizgerät

(30) Priorität: **22.12.77 DEU 7739046**

(43) Veröffentlichungstag der Anmeldung:
**11.07.79 Patentblatt 79/14**

(45) Bekanntmachung des Hinweises auf die Patenterteilung:
**01.10.80 Patentblatt 80/20**

(84) Benannte Vertragsstaaten:
**BE CH FR GB NL SE**

(56) Entgegenhaltungen:
**CH - A - 517 917**
**DE - U - 73 23567**
**FR - A - 2 133 614**
**US - A - 1 398 168**
**US - A - 3 835 290**

(73) Patentinhaber: **Rittal-Werk Rudolf Loh GmbH & Co. KG**
**Siegener Strasse 31**
**D - 6341 Rittershausen (DE)**

(72) Erfinder: **Heppner, Manfred, Ing. grad.**
**Kaiserstrasse**
**D - 6342 Haiger 6 (DE)**

(74) Vertreter: **Vogel, Georg/Auenweg 14**
**D - 7141 Schwieberdingen (DE)**

Courier Press, Leamington Spa, England.

EP 0 002 660 B1

Schaltschrank-Heizgerät

Die Erfindung betrifft ein Schaltschrank-Heizgerät das aus einer die Wärme gut leitenden und abstrahlenden Grundplatte, auf der die unterzubringenden Geräteteile, wie Heizkörper, Thermostat u.a., befestigt sind und einer Halteplatte besteht, auf deren Außenseite eine auf eine Tragschiene des Schaltschrankes abgestimmte Schanappvorrichtung angebracht ist.

Derartige Heizgeräte werden in Schaltschränken eingebaut, um die darin befindliche oder aus beliebigem Grund eindringende Luft beliebiger Luftfeuchtigkeit daran zu hindern, daß sich die Feuchtigkeit auf die empfindlichen Schaltgeräte niederschlägt. Die eingebaute Heizung ist so auszulegen, daß die Schwitz-und Kondenswasserbildung verhindert ist.

Ein Schaltschrank-Heizgerät der eingangs erwähnten Art ist durch das DE—U 73 23 567 bekannt. Der Geräteaufbau erfordert neben der Grundplatte und der Halteplatte eine besondere Wärmeabstrahlplatte, welche mit der Grundplatte verbunden werden muß. Außerdem ist eine Vielzahl von Befestigungsteilen zur Festlegung der Geräteteile auf der Grundplatte erforderlich.

Wie die FR—A 21 33 614 zeigt, ist es auch schon bekannt, bei einem Heizgerät an der Grundplatte einstückig Befestigungselemente anzuformen, in die Befestigungselemente einer Abdeckplatte einrasten.

Es ist Aufgabe der Erfindung, das Schaltschrank-Heizgerät der eingangs erwähnten Art so auszugestalten, daß der Teile- und Montageaufwand wesentlich reduziert werden kann. Es soll insbesondere auf die zusätzliche Wärmeabstrahlplatte verzichtet werden können und vor allen Dingen die Anbringung der Geräteteile und der Halteplatte an der Grundplatte erleichtert werden.

Diese Aufgabe wird nach der Erfindung durch die Kombination folgender Merkmale erreicht, daß die Grundplatte als länglicher, im Querschnitt im wesentlichen U-förmiger Profilabschnitt ausgebildet ist, daß an dem Profilabschnitt auf der Außenseite seines Mittelsteges längsgerichtete Abstrahlrippen und auf der Innenseite desselben mindestens ein durchgehender Befestigungsdoppelsteg einstückig angeformt sind, daß die Halteplatte an beiden Schmalseiten mit rechtwinklig abgebogenen Stirnseitenteilen versehen ist, daß auch an den Innenseiten der beiden Seitenschenkel des Profilabschnittes Befestigungsdoppelstege angeformt sind und daß diese Befestigungsdoppelstege an den Endbereichen der Seitenschenkel des Profilabschnittes so angeformt sind, daß ihre Außenstege mit überstehenden Randstegen der Seitenschenkel des Profilabschnittes eine Aufnahme und Befestigung für die Halteplatte bilden.

Die so ausgebildete Grundplatte übernimmt nicht nur die Funktion der Wärmeabstrahlplatte, sie stellt gleichzeitig auch mit ihrem Befestigungsdoppelsteg die Aufnahme für die Befestgungsschrauben dar, mittels derer die Geräteteile und die Halteplatte direkt an der Grundplatte angeschraubt werden können. Die an den Seitenschenkeln angeformten Befestigungsdoppelstege erleichtern das Anbringen der Halteplatte, wobei die Außenstege dieser Befestigungsdoppelstege die Stirnseitenteile der Halteplatte gleichzeitig noch abstützen.

Die Herstellung des Profilabschnittes wird dadurch erleichtert, daß sich die Abstrahlrippen zu den freien Enden hin verjüngen.

Der Befestigungsdoppelsteg ist nach einer Ausgestaltung so ausgeführt, daß die beiden Stege des Befestigungsdoppelsteges in kleinem Abstand zueinander an der Innenseite des Mittelsteges des Profilabschnittes angeformt sind und eine Einschraubnut einschließen, die im Bodenbereich in einen im Querschnitt runden oder sechseckigen Endbereich übergeht. In die so gebildete Einschraubnut können an beliebigen Stellen selbstschneidende Befestigungsschrauben eingeschraubt werden. Außerdem bilden die im Querschnitt runden oder sechseckigen Endbereiche des Befestigungsdoppelsteges Aufnahmen, in die von den Stirnseiten des Profilabschnittes her im Querschnitt größere Befestigungsschrauben eingeschraubt werden können. Darüber lassen sich die Stirnseitenteile der Halteplatte an dem Profilabschnitt festlegen.

Nach einer bevorzugten Ausführungsform ist vorgesehen, daß der Befestigungsdoppelsteg in der Mitte des Mittelsteges des Profilabschnittes angeordnet ist. Damit wird eine optimale Raumaufteilung in dem durch den U-förmigen Profilabschnitt umschlossenen Raum erreicht.

Das neue Schaltschrank-Heizgerät ist nach einer Weiterbildung nicht auf die Festlegung an einer Tragschiene des Schaltschrankes beschränkt, wenn vorgesehen ist, daß die Schnappvorrichtung lösbar mit der Halteplatte verbunden ist und daß die Halteplatte an den Längsseiten mit abstehenden Anschraublaschen versehen ist.

Die Anbringung an einer Wand wird dabei dadurch erleichtert, daß die Anschraublaschen parallel zur Heizplatte ausgerichtet, jedoch gegenüber der Außenseite der Halteplatte so versetzt sind, daß sie an dieser vorstehen.

Aus Festigkeitsgründen ist weiterhin vorgesehen, daß die Halteplatte durch Längssicken versteift ist. Die Halteplatte kann dann aus dünnwandigem Material hergestellt werden.

Der Einbau der Heizkörper ist nach einer Ausgestaltung so vorgenommen, daß der Profilabschnitt zu beiden Seiten des Befestigungsdoppelsteges je einen plattenförmigen Heizkörper mit Flachsteckanschlüssen aufnimmt und daß diese Heizkörper mittels einer Klemmleiste am Profilabschnitt gehalten sind, die mittels einer Befestigungsschraube an dem Befestigungsdoppelsteg des Profilabschnittes festgeschraubt ist. Zur optimalen Raumausnützung
ist dabei die Auslegung so, daß die Heizkörper
jeweils bis an die zugekehrte Innenseite des
zugeordneten Seitenschenkels des Profilabschnittes herangeführt sind.

Für den Masseanschluß des Heizgerätes ist
noch vorzusehen, daß in der Halteplatte ein
Lappen ausgestanzt und als Flachsteckanschluß zur Innenseite der Halteplatte hin eingebogen ist.

Der elektrische Anschluß des Schaltschrank-
Heizgerätes ist so gelöst, daß eine Kabelverschraubung oder dgl. für ein Anschlußkabel
in dem unteren Stirnseitenteil der Halteplatte
festgelegt ist.

Zur eindeutigen Überwachung der von den
Heizkörpern erzeugten Wärme ist vorgesehen,
daß der Thermostat über den Heizkörpern an
dem Befestigungsdoppelsteg festgeschraubt ist.

Die Erfindung wird anhand eines in den
Zeichnungen dargestellen Ausführungsbeispiels näher erläutert. Es zeigen:

Figur 1 eine Ansicht auf die Rückseite des
Schaltschrank-Heizgerätes, wobei die Halteplatte teilweise ausgebrochen ist, um die mit
der Grundplatte verbundenen Geräteteile
einsehen zu können,

Fig. 2 eine Seitenansicht des Schaltschrank-
Heizgerätes, wobei der Seitenschenkel der
Grundplatte teilweise ausgebrochen ist, um
weider die mit der Grundplatte verbundenen
Geräteteile einsehen zu können,

Fig. 3 die Halteplatte, auf die Innenseite gesehen,

Fig. 4 eine Seitenansicht der Halteplatte,

Fig. 5 die Ansicht auf das untere Stirnseitenteil der Halteplatte mit dem Durchbruch für die
Kabelverschraubung und

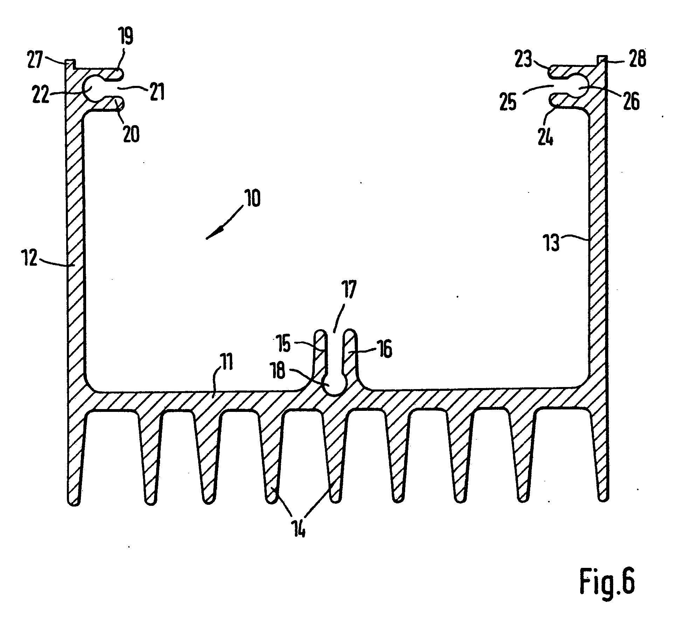

Fig. 6 in vergrößerter Darstellung einen Querschnitt durch die als Profilabschnitt ausgebildete Grundplatte.

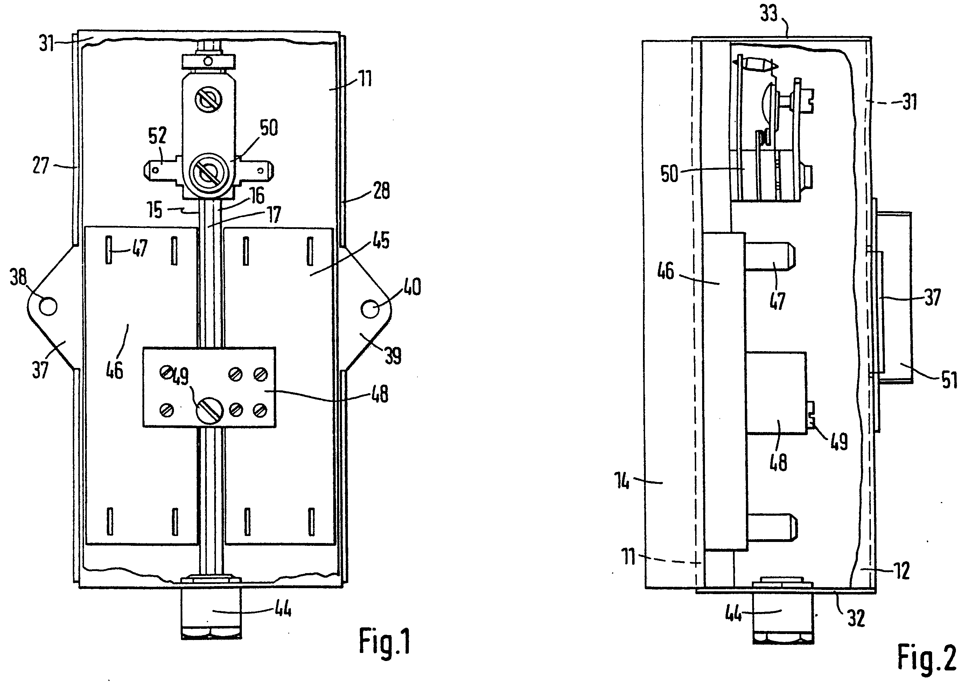

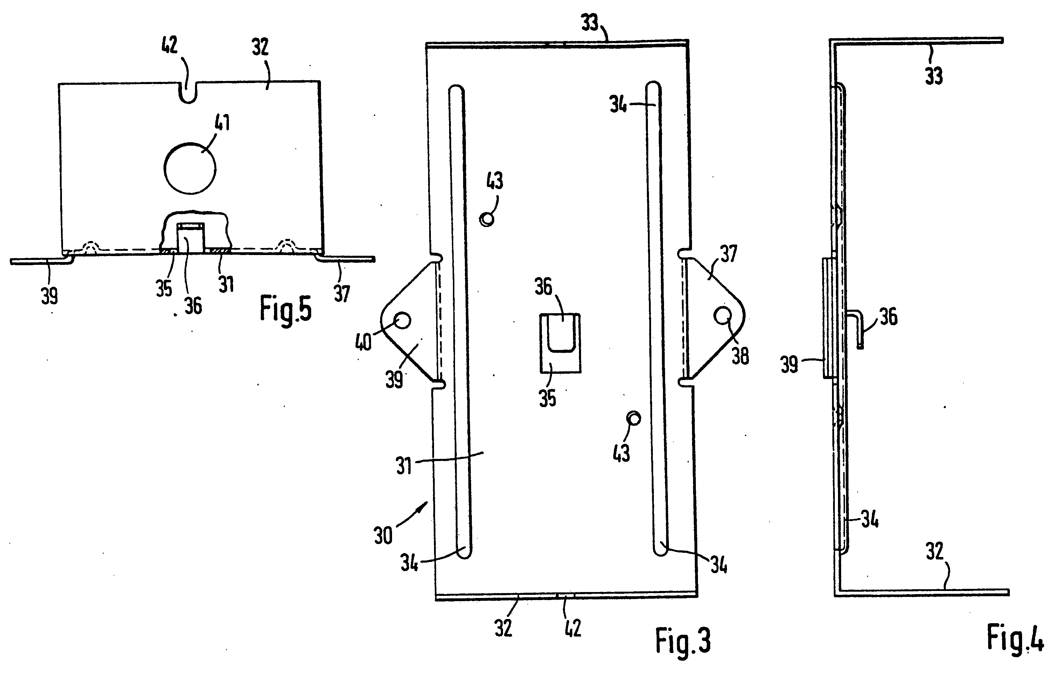

Das in den Fig. 1 und 2 zwei Ansichten dargestellte Schaltschrank-Heizgerät besteht aus
einer Halteplatte 30, wie sie in den Fig. 3 bis 5
gezeigt ist, und einer Grundplatte 10 nach Fig.
6, auf der die Geräteteile befestigt werden.

Die Grundplatte 10 ist ein Profilabschnitt mit
im wesentlichen U-förmigem Querschnitt. Der
Mittelsteg 11 dieses länglichen Profilabschnittes ist auf der Außenseite mit den längsgerichteten Abstrahlrippen 14 versehen, die
einstückig angeformt sind und sich zu ihren
freien Enden hin verjüngen.

Auf der Innenseite des Mittelsteges 11 des
Profilabschnittes ist in der Mitte ein aus den
beiden Stegen 15 und 16 bestehender Befestigungsdoppelsteg angeformt, der eine durchgehende Einschraubnut 17 zwischen den
beiden, im Abstand zueinander stehenden
Stegen 15 und 16 aufweist. Diese Einschraubnut 17 ist im Endbereich als im Querschnitt runde oder sechseckige Befestigungsaufnahme
18 erweitert. Auch an den Innenseiten der
Seitenschenkel 12 und 13 des Profilabschnittes sind mit den Stegen 19 und 20 bzw.
23 und 24 weitere durchgehende Befestigungsdoppelstege angeformt, die jeweils eine
Einschraubnut 21 bzw. 25 mit erweitertem
Endbereich 22 bzw. 26 bilden. Die äußeren
Stege 19 und 23 dieser Befestigungsdoppelstege bilden mit den überstehenden Randstegen
27 und 28 der Seitenschenkel 12 und 13 eine
Aufnahme für die Halteplatte 30 nach Fig. 3 bis
5.

Wie die Fig. 1 und 2 zeigen, werden die
beiden plattenförmigen Heizkörper 45 und 46
mit den Flach-Steckanschlüssen 47 zu beiden
Seiten des Befestigungsdoppelsteges aus den
beiden Stegen 15 und 16 angeordnet. Die Heizkörper 45 und 46 reichen dabei bis an die
Innenseiten der zugeordneten Seitenschenkel
12 und 13 des Profilabschnittes heran und
werden mittels der Klemmleiste 48 an der
Grundplatte 10 befestigt. Die Klemmleiste 48
überdeckt die beiden Heizkörper 45 und 46 und
wird mittels der Befestigungsschraube 49
festgezogen. Die Befestigungsschraube 49 kann
als selbstschneidende Schraube an beliebiger
Stelle in die durch die beiden Stege 15 und 16
gebildete Einschraubnut 17 eingeschraubt
werden. In gleicher Weise läßt sich auch der
Thermostat 50 an der Grundplatte 10 festlegen.

Der Profilabschnitt mit den darin untergebrachten und festgelegten Geräteteilen wird
mittels der Halteplatte 30 nach Fig. 3 bis 5 verschlossen. Diese Halteplatte 30 ist durch Längssicken 34 versteift und weist an den beiden
Schmalseiten rechtwinklig abgebogene Stirnseitenteile 32 und 33 auf. Die Stirnseitenteile
32 und 33 sind mit einem Befestigungsschlitz
42 versehen, über den die Halteplatte 30 an der
Grundplatte 10 festgelegt werden kann. Die
Befestigungsschrauben werden dabei von den
Stirnseiten her in den erweiterten Endbereich
18 des aus den beiden Stegen 15 und 16 gebildeten Befestigungsdoppelsteges eingeschraubt. Die Stirnseitenteile 32 und 33 können
weitere Durchbrüche aufweisen, so daß Befestigungsschrauben auch in die erweiterten
Endbereiche 22 und 26 der Befestigungsdoppelstege an den Innenseiten der Seitenschenkel 12 und 13 des Profilabschnittes eingeschraubt werden können. Ein Stirnseitenteil, z.B.
32, der Halteplatte 30 weist einen Durchbruch
41 auf, in dem eine Kabelverschraubung 44
oder dgl. angeordnet ist.

Das Anschlußkabel ist durch die Kabelverschraubung 44 eingeführt und die Adern sind
mit der Klemmleiste 48 in bekannter Weise verschraubt. Diese Klemmleiste 48 übernimmt die
Festlegung der Heizkörper 45 und 46, da sie
diese überdeckt und selbst mittels der Befestigungsschraube 49 mit dem Befestigungsdoppelsteg mit den Stegen 15 und 16 verbunden ist. Dabei kann zwischen der Klemmleiste 48 und den Heizkörpern 45 und 46 auch eine Befestigungsplatte angeordnet sein, die bis zu den Seitenschenkeln 12 und 13 des U-Profilabschnittes reichen. Die Verdrahtung innerhalb des Heizgerätes erfolgt über Verbindungsleitungen, die einseitig mit der Klemmleiste 48 verschraubt und am anderen Ende mit Steckschuhen versehen sind. Diese Steckschuhe erlauben eine lösbare Verbindung mit den Flachsteckanschlüssen 47 der Heizkörper 45 und 46, sowie den Flachsteckanschlüssen 52 des Thermostaten 50, Die Verdrahtung ist dabei vorzugsweise so, daß die Heizkörper 45 und 46 mit dem Thermostaten 50 in Reihe geschaltet mit den beiden Polen des Netzanschlusses verbunden ist, während der Masseanschluß über die Klemmleiste 48 zu einem Flachsteckanschluß 36 geführt ist, der im Bereich der Ausnehmung 35 aus der Halteplatte 30 als Lappen ausgestanzt und zur Innenseite der Halteplatte 30 hin eingebogen ist.

Die Anordnung ist vorzugsweise so gewählt, daß die Kabelverschraubung 44 in dem unteren Stirnseitenteil 32 der Halteplatte 30 festgelegt ist und daß der Thermostat 50 gegenüber den Heizkörpern 45 un 46in dem Befestigungsdoppelsteg nach oben versetzt festgeschraubt ist.

An den Längsseiten der Halteplatte 30 sind Anschraublaschen 37 und 39 mit den Befestigungsbohrungen 38 und 40 vorgesehen. Diese Anschraublaschen 37 und 39 erlauben die direkte Befestigung des Schaltschrank-Heizgerätes an einer Wand. Dabei sind die Anschraublaschen parallel zur Halteplatte 30 ausgerichtet, jedoch so versetzt, daß sie über die Außenseite der Halteplatte 30 vorstehen, wie besonders den Figuren 4 und 5 zu entnehmen ist.

Die Halteplatte 30 ist zudem mit Schraublöchern 43 versehen, so daß auf der Außenseite eine an sich bekannte Schnappvorrichtung 51 angeschraubt werden kann. Mit dieser Schnappvorrichtung 51 kann das Schaltschrank-Heizgerät in bekannter Weise in eine Tragschiene des Schaltschrankes eingerastet und daran festgelegt werden.

## Patentansprüche

1. Schaltschrank-Heizgerät, bestehend aus einer die Wärme gut leitenden und abstrahlenden Grundplatte (10), auf der die unterzubringenden Geräteteile, wie Heizkörper, Thermostat u.a., befestigt sind, und einer die Grundplatte (10) abschließenden Halteplatte (30), auf deren Außenseite eine auf eine Tragschiene des Schaltschrankes abgestimmte Schnappvorrichtung (51) angebracht ist, dadurch gekennzeichnet, daß die Grundplatte (10) als länglicher, im Querschnitt im wesentlichen U-förmiger Profilabschnitt ausgebildet ist, daß an dem Profilabschnitt auf der Außenseite seines Mittelsteges (11) längsgerichtete Abstrahlrippen (14) und auf der Innenseite desselben mindestens ein durchgehender Befestigungsdoppelsteg (15,16) einstückig angeformt sind, daß die Halteplatte (30) an beiden Schmalseiten mit rechtwinklig abgebogenen Stirnseitenteilen (32,33) versehen ist, daß auch an den Innenseiten der beiden Seitenschenkel (12,13) des Profilabschnittes Befestigungsdoppelstege (19,20 bzw. 23,24) angeformt sind und daß diese Befestigungsdoppelstege an den Endbereichen der Seitenschenkel (12, 13) des Profilabschnittes so angeformt sind, daß ihre Außenstege (19,23) mit überstehenden Randstegen (27,28) der Seitenschenkel (12,13) des Profilabschnittes eine Aufnahme und Befestigung für die Halteplatte (30) bilden.

2. Schaltschrank-Heizgerät nach Anspruch 1, dadurch gekennzeichnet, daß sich die Abstrahlrippen (14) zu den freien Enden hin verjüngen.

3. Schaltschrank-Heizgerät nach Anspruch 1 oder 2, dadurch gekennzeichnet, daß die beiden Stege (15,16) des Befestigungsdoppelsteges in kleinem Abstand zueinander an der Innenseite des Mittelsteges (11) des Profilabschnittes angeformt sind und eine Einschraubnut (17) einschließen, die im Bodenbereich in einen im Querschnitt runden oder sechseckigen Endbereich (18) übergeht.

4. Schaltschrank-Heizgerät nach einem der Ansprüche 1 bis 3, dadurch gekennzeichnet, daß die Schnappvorrichtung (51) lösbar (43) mit der Halteplatte (30) verbunden ist und daß die Halteplatte (30) an den Langsseiten mit abstehenden Anschraublaschen (37,39) versehen ist.

5. Schaltschrank-Heizgerät nach Anspruch 4, dadurch gekennzeichnet, daß die Anschraublaschen (37,39) parallel zur Heizplatte (30) ausgerichtet, jedoch gegenüber der Außenseite der Halteplatte (30) so versetzt sind, daß sie an dieser vorstehen.

6. Schaltschrank-Heizgerät nach einem der Ansprüche 1 bis 5, dadurch gekennzeichnet, daß in der Halteplatte (30) ein Lappen ausgestanzt und als Flachsteckanschluß (36) zur Innenseite der Halteplatte (30) hin eingebogen ist.

7. Schaltschrank-Heizgerät nach einem der Ansprüche 1 bis 6, dadurch gekennzeichnet, daß der Profilabschnitt zu beiden Seiten des Befestigungsdoppelsteges (15,16) je einen plattenförmigen Heizkörper (45,46) mit Flachsteckanschlüssen (47) aufnimmt und daß diese Heizkörper (45,46) mittels einer Klemmleiste (48) am Profilabschnitt gehalten sind, die mittels einer Befestigungsschraube (49) an dem Befestigungsdoppelsteg (15,16) des Profilabschnittes festgeschraubt ist.

8. Schaltschrank-Heizgerät nach Anspruch 7, dadurch gekennzeichnet, daß die Heizkörper (45,46) jeweils bis an die zugekehrte Innenseite des zugeordneten Seitenschenkels (12,13) des Profilabschnittes herangeführt sind.

9. Schaltschrank-Heizgerät nach einem der Ansprüche 1 bis 8, dadurch gekennzeichnet, daß eine Kabelverschraubung (44) oder dgl. für ein Anschlußkabel in dem unteren Stirnseitenteil (32) der Halteplatte (30) festgelegt ist.

10. Schaltschrank-Heizgerät nach einem der Ansprüche 1 bis 9, dadurch gekennzeichnet, daß der Thermostat (50) über den Heizkörpern (45,46) an dem Befestigungsdoppelsteg (15,16) festgeschraubt ist.

**Revendications**

1. Dispositif chauffant pour armoire de commande, comprenant un boîtier (10) qui conduit et diffuse bien la chaleur, dans lequel sont fixés les organes à protéger, tels que des éléments chauffants, un thermostat ou organes analogues, ainsi qu'une plaque de support (30) qui ferme ledit boîtier (10) et qui comporte, sur sa face externe, un dispositif d'encliquetage (51) adapté au profilé de support de ladite armoire de commande, dispositif caractérisé en ce que: ledit boîtier (10) a la forme d'un profilé s'étendant longitudinalement et dont la section est essentiellement en U; la face externe de l'âme médiane (11) de ce profilé présente des nervures diffusantes (14) orientées longitudinalement, et la face interne de ladite âme (11) comporte au moins une fourchette de fixation (15,16), lesdites nervures (14) et ladite fourchette (15,16) formant un seul bloc avec ledit profilé; la plaque de support (30) présente, sur ses petits côtés, des parois extrêmes (32,33) coudées à angle droit; les faces internes des deux âmes latérales (12,13) du profilé présentent également des fourchette de fixation (19,20; 23,24) solidaires; et dans les régions extrêmes desdites âmes latérales (12,13), ces fourchettes du profilé sont conformées de telle sorte que leurs branches externes (19,23) forment, avec des nervures marginales saillantes (27,28) desdites âmes latérales (12,13) dudit profilé, un logement permettant la fixation de ladite plaque de support (30).

2. Dispositif selon la revendication 1, caractérisé en ce que les nervures diffusantes (14) sont de section décroissante en direction de leurs extrémités libres.

3. Dispositif selon l'une revendications 1 et 2, caractérisé en ce que les deux branches (15,16) de la fourchette de fixation sont espacées par un petit invervalle sur la face interne de l'âme médiane (11) du profilé, en délimitant une gorge (17) permettant d'insérer une vis et qui se prolonge en une région extrême (18) de section circulaire ou hexagonale.

4. Dispositif selon l'une quelconque des revendications 1 à 3, caractérisé en ce que le dispositif d'encliquetage (51) peut être monté de manière amovible (en 43) sur la plaque de support (30), et en ce que ladite plaque (30) présente, sur ses faces longitudinales, des pattes saillantes (37,39) de fixation par vissage.

5. Dispositif selon la revendication 4, caractérisé en ce que les pattes de fixation (37,39) sont disposées parallèlement à la plaque de support (30), mais sont toutefois décalées par rapport à la face externe de ladite plaque (30) de manière à en faire saillie.

6. Dispositif selon l'une quelconque des revendications 1 à 5, caractérisé en ce que, dans la plaque de support (30), une languette, venue d'estampage et constituant une connexion (36) pour fiche plate, est rabattue vers la face interne de ladite plaque (30).

7. Dispositif selon l'une quelconque des revendications 1 à 6, caractérisé en ce que; le profilé loge, de part et d'autre de la fourchette de fixation (15,16), un élément chauffant (45; 46) présentant des connexions (47) pour fiches plates; et les éléments chauffants (45,46) sont maintenus contre le profilé par une barrette de fixation (48) assujettie à la branche de fixation (15,16) dudit profilé au moyen d'une vis de fixation (49).

8. Dispositif selon la revendication 7, caractérisé en ce que chaque élément chauffant (45; 46) s'étend jusqu'à la face interne de l'âme latérale associée (12; 13) du profilé.

9. Dispositif selon l'une quelconque des revendications 1 à 8, caractérisé en ce qu'un serre-câble (44), ou un organe analogue destiné à maintenir un câble de raccordement, est fixé à la paroi extrême inférieure (32) de la plaque de support (30).

10. Dispositif selon l'une quelconque des revendications 1 à 9, caractérisé en ce que le thermostat (50) est fixé à la fourche de fixation (15,16), au-dessus des éléments chauffants (45,46).

**Claims**

1. Switch cabinet heater consisting of a baseplate (10) of well heat-conducting and -radiating material to which the parts to be accommodated, such as the heater element, the thermostat and others are mounted, and of a supporting plate (30) terminating said baseplate (10), to the outside of which a snap-section device (51) adapted to a supporting rail of the switch cabinet is attached, characterized in that said baseplate (10) is designed as an oblong profile section of substantially U-shaped cross-section, that to said profile section, on the outside of its center web (11), longitudinally directed radiating ribs (14) and, to the inside thereof, at least one continuous double-web type fatening member (15,16) are moulded in one piece, that said supporting plate (30) is provided on both of its narrow sides with rectangularly bent face-side members (32, 33), that double-web type fastening members (19,20 or 23,24) are also mounted to the insides of the two side legs (12,13) of said profile section and that said double-web type fastening members are in such a way moulded to the ends of said side legs (12,13) of said profile section that their outer webs (19,23) together with protruding marginal webs (27,28) of said side legs (12,13) of said profile section form a receptacle and attachment for said supporting plate (30).

2. A switch cabinet heater as claimed in claim 1, characterized in that said radiating ribs (14) are tapered towards the free ends.

3. A switch cabinet heater as claimed in claims 1 and 2, characterized in that said two webs (15,16) of said double-web type fastening member are moulded at a small spaced relation to the inside of said center web (11) of said profile section and include a grooved screwhole (17) which, in its bottom part, proceeds into an end portion (18) of either circular or hexagonal cross-section.

4. A switch cabinet heater as claimed in any one of claims 1 to 3, characterized in that said snap-section device (51) is connected detachably (43) to said supporting plate and that said supporting plate (30) is provided on its longitudinal sides with prominent screw-on plates (37,39).

5. A switch cabinet heater as claimed in claim 4, characterized in that said screw-on plates (37,39) are aligned in parallel with said supporting plate (30), but staggered in such a way in relation to the ouside of said supporting plate (30) as to project therefrom.

6. A switch cabinet heater as claimed in any one of claims 1 to 5, characterized in that a flap is punched out of said supporting plate (30) and bent inwardly, i.e. towards the inside of said supporting plate (30), for serving as a flat connecting terminal (36),

7. A switch cabinet heater as claimed in any one of claims 1 to 6, characterized in that said profile section accommodates on each side of said double-web type fastening member (15,16) one plate-shaped heater element (45,46) each provided with flat connecting terminals (47) and that said heater elements (45,46) are each retained by means of a clamping plate (48) to said double-web type fastening member (15,16) of said profile section, said clamping plate (48) being secured in position with the aid of a fastening screw (49).

8. A switch cabinet heater as claimed in claim 7, characterized in that said heater elements (45,46) are each led up to the respective facing interior sides of their associated side legs (12,13) of said profile section.

9. A switch cabinet heater as claimed in any one of claims 1 to 8, characterized in that a cable inlet screw joint (44) or the like, for an incoming connecting cable, is secured in the lower face side portion (32) of said supporting plate (30).

10. A switch cabinet heater as claimed in any one of claims 1 to 9, characterized in that said thermostat (50) is firmly screwed into position at said double-web type fastening member (15,16) above said heater elements (45,46).

Fig.2

Fig.1

Fig.4

Fig.3

Fig.5

Fig.6